# EUROPEAN PATENT APPLICATION

(11) **EP 4 682 115 A1**
(43) Date of publication of application: **21.01.2026**
(21) Application number: 24882001.1
(22) Date of filing: 21.08.2024
(51) Int. Cl.: C02F 1/461

(54) **ELECTROLYTIC ION WATER GENERATION DEVICE**

(30) Priority: 24.10.2023 JP 2023182517
(71) Applicant: Kabushiki Kaisha E-Plan, Funabashi-shi, Chiba, 273-0014 (JP)
(72) Inventor: MATSUZAWA, Tamio, Funabashi-shi, Chiba 273-0014 (JP)
(74) Representative: Marks & Clerk LLP
(86) International application number: PCT/JP2024/029636
(87) International publication number: WO 2025/088884

(57) **Abstract**

An electrolytic ion water generation apparatus capable of selectively generating electrolytic ion waters having different pH values with one apparatus is provided. An electrolytic ion water generation apparatus of the present invention includes: an electrolytic solution tank configured to store an electrolytic solution; an electrolytic bath including a cathode chamber and an anode chamber partitioned by an ion exchange membrane; and a DC power source configured to apply a voltage between electrode plates including a cathode plate provided in the cathode chamber and an anode plate provided in the anode chamber, the electrolytic ion water generation apparatus being configured to generate electrolytic ion water, by applying a voltage between the electrode plates with use of the DC power source to cause a reduction reaction. The electrolytic ion water generation apparatus further includes: a generated solution tank configured to store the electrolytic ion water generated in the electrolytic bath; a raw water supplying system configured to supply raw water to the cathode chamber of the electrolytic bath; a generated solution supplying system configured to supply the electrolytic ion water in the generated solution tank to the cathode chamber of the electrolytic bath; and an operation unit configured to perform switching between the raw water supplying system and the generated solution supplying system.

## Description

### Technical Field

The present invention relates to a generation apparatus for electrolytic ion water (also called alkaline ion water or alkaline electrolyzed water).

### Background Art

There has hitherto been known an electrolytic ion water generation apparatus including: a generation tank configured to store raw water; an electrolytic solution tank configured to store an electrolytic solution; an electrolytic bath in which ion exchange is to be carried out; and a DC power source configured to apply a voltage between electrodes of the electrolytic bath (Patent Literatures 1 and 2).

The electrolytic bath includes: an ion exchange membrane; and a cathode chamber and an anode chamber partitioned by the ion exchange membrane. A cathode plate including a cathode-side terminal is provided in the cathode chamber, and an anode plate including an anode-side terminal is provided in the anode chamber. A minus side of the DC power source is connected to the cathode-side terminal, and a plus side of the DC power source is connected to the anode-side terminal, thereby being capable of applying a DC voltage between the electrodes.

In the electrolytic ion water generation apparatus, when the DC voltage is applied between the terminals by the DC power source, electrolysis occurs. A cation generated due to the electrolysis in the anode chamber passes through the ion exchange membrane to be reduced with the raw water in the cathode chamber, thereby generating electrolytic ion water.

### Citation List

### Patent Literature

[PTL 1] JP2012-40489 A
[PTL 2] WO 2016/016954 A

### Summary of Invention

### Technical Problem

An object to be achieved by the present invention is to provide an electrolytic ion water generation apparatus capable of selectively generating electrolytic ion waters having different pH values with one apparatus.

### Solution to Problem

According to the present invention, there is provided an electrolytic ion water generation apparatus, including: an electrolytic solution tank configured to store an electrolytic solution; an electrolytic bath including a cathode chamber and an anode chamber partitioned by an ion exchange membrane; and a DC power source configured to apply a voltage between electrode plates including a cathode plate provided in the cathode chamber and an anode plate provided in the anode chamber, the electrolytic ion water generation apparatus being configured to generate electrolytic ion water, by applying a voltage between the electrode plates with use of the DC power source to cause a reduction reaction. The electrolytic ion water generation apparatus further includes: a generated solution tank configured to store the electrolytic ion water generated in the electrolytic bath; a raw water supplying system configured to supply raw water to the cathode chamber of the electrolytic bath; a generated solution supplying system configured to supply the electrolytic ion water in the generated solution tank to the cathode chamber of the electrolytic bath; and an operation unit configured to perform switching between the raw water supplying system and the generated solution supplying system.

In the electrolytic ion water generation apparatus of the present invention, the electrolytic ion water generation apparatus may further include a first solution storage tank configured to store electrolytic ion water having a first pH value, and between the cathode chamber of the electrolytic bath and the first solution storage tank, a generated solution first sending system configured to send the electrolytic ion water that has passed through the cathode chamber to the first solution storage tank may be provided.

In the electrolytic ion water generation apparatus of the present invention, between the cathode chamber of the electrolytic bath and the generated solution tank, a generated solution second sending system configured to send the electrolytic ion water that has passed through the cathode chamber to the generated solution tank may be provided.

In the electrolytic ion water generation apparatus of the present invention, the electrolytic ion water generation apparatus may further include a second solution storage tank configured to store electrolytic ion water having a second pH value, and between the generated solution tank and the second solution storage tank, a second solution sending system configured to send the electrolytic ion water having the second pH value stored in the generated solution tank to the second solution storage tank may be provided.

### Advantageous Effects of Invention

According to the electrolytic ion water generation apparatus of the present invention, it is possible to selectively generate electrolytic ion waters having different pH values with one apparatus.

### Brief Description of Drawings

FIG. 1 is a schematic diagram for illustrating an example of an electrolytic ion water generation apparatus of the present invention.
FIG. 2 is a schematic view for illustrating an example of a configuration of an electrolytic bath.
FIG. 3 is an explanatory diagram for illustrating an operation in a case in which electrolytic ion water having a first pH value is generated.
FIG. 4 is an explanatory diagram for illustrating an operation in a case in which electrolytic ion water having a second pH value is generated.

### Description of Embodiments

### (Embodiment)

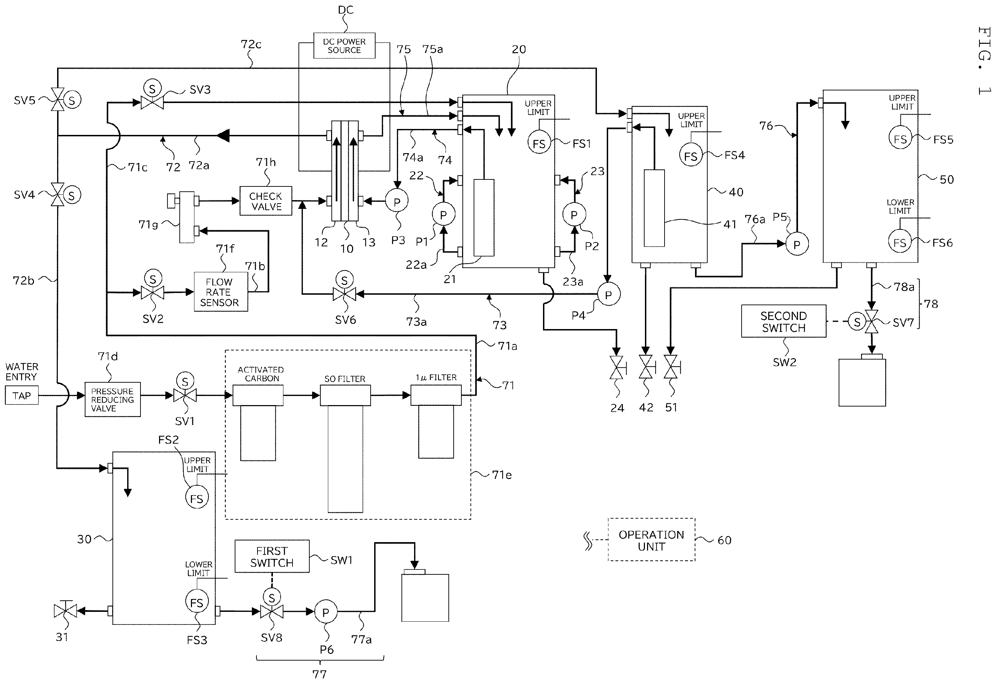

An example of an embodiment of the present invention is described with reference to the drawings. FIG. 1 is a schematic diagram of an electrolytic ion water generation apparatus. As illustrated in FIG. 1, the electrolytic ion water generation apparatus of this embodiment includes an electrolytic bath 10, an electrolytic solution tank 20, a first solution storage tank 30, a generated solution tank 40, a second solution storage tank 50, and an operation unit 60.

Those components are connected by a plurality of flow systems, such as a raw water supplying system 71, a generated solution sending system 72, a generated solution supplying system 73, an electrolytic solution supplying system 74, an electrolytic solution sending system 75, a second solution sending system 76, a first solution take-out system 77, and a second solution take-out system 78 which are to be described later, and are configured to function as one electrolytic ion water generation apparatus. Details of the respective components are described below.

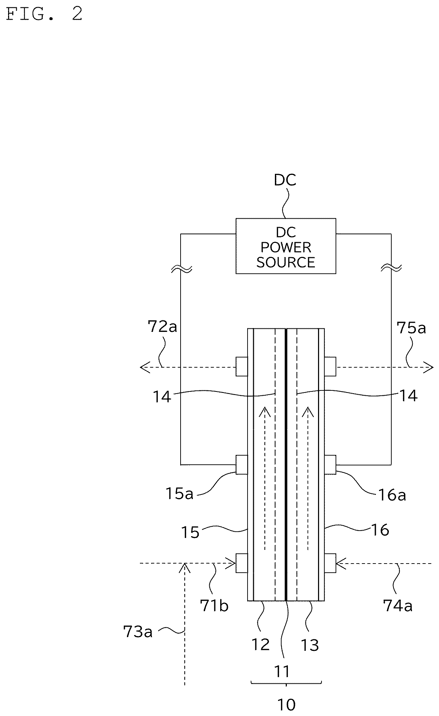

The electrolytic bath 10 is a bath in which ion exchange is to be carried out through electrolysis, in other words, a bath in which a reduction reaction occurs. As illustrated in FIG. 2, the electrolytic bath 10 in this embodiment includes a cathode chamber 12 and an anode chamber 13 partitioned by an ion exchange membrane 11. The ion exchange membrane 11 is an exchange membrane having the property of allowing passage of only a cation while preventing passage of raw water and an electrolytic solution (cation exchange membrane).

As the ion exchange membrane 11, for example, in addition to an existing ion exchange membrane such as "Selemion" (trademark) manufactured by Asahi Glass Co., Ltd. and an exchange membrane manufactured by Du Pont Japan, a novel ion exchange membrane having a similar function may be used.

Spacers 14, which are each made of an insulating material with a mesh-like form, are arranged on both outer sides of the ion exchange membrane 11, and a cathode plate 15 and an anode plate 16 are provided on outer sides of the spacers 14. For example, a net which is made of nylon and has a mesh size of 5-mm square may be used as the spacer 14.

A cathode terminal 15a is provided to the cathode plate 15, and an anode terminal 16a is provided to the anode plate 16. A minus side of the DC power source DC is connected to the cathode terminal 15a, and a plus side of the DC power source DC is connected to the anode terminal 16a, thereby being capable of applying a DC voltage from the DC power source DC.

The electrolytic solution tank 20 is a container for storing an electrolytic solution to be used to generate electrolytic ion water. In the electrolytic solution tank 20, a strainer (first strainer) 21 for removing solid matters in the electrolytic solution is provided. In the electrolytic solution tank 20, a float switch FS1 for detecting an upper limit of a storage amount is provided.

The electrolytic solution tank 20 has two stirring devices 22 and 23 provided to stir the electrolytic solution in the electrolytic solution tank 20. The stirring devices 22 and 23 include circulation passages 22a and 23a and pumps (first pump P1 and second pump P2), respectively. Various types of electrolytic solutions can be used, but in this embodiment, as the electrolytic solution, an aqueous solution obtained by dissolving potassium carbonate into raw water is used.

In addition, the electrolytic solution tank 20 has a drain (first drain) 24 provided so as to discharge the electrolytic solution in the electrolytic solution tank.

The first solution storage tank 30 is a container for storing generated electrolytic ion water having a first pH value. In this embodiment, electrolytic ion water having pH 12.5 is stored in the first solution storage tank 30.

In the first solution storage tank 30, a float switch FS2 for detecting an upper limit of a storage amount and a float switch FS3 for detecting a lower limit thereof are provided. When it is detected that the storage amount of the electrolytic ion water has reached the upper limit or that the storage amount of the electrolytic ion water has fallen below a reference value, notification of this fact is given to the outside by a lamp or a sound.

The first solution take-out system 77 for taking out the stored electrolytic ion water is connected to the first solution storage tank 30. The first solution take-out system 77 includes a first take-out passage 77a, and an eighth valve SV8 and a sixth pump P6 are provided in the middle of the first take-out passage 77a.

A first switch SW1 is connected to the eighth valve SV8, and a predetermined amount of electrolytic ion water can be taken out through operation of the first switch SW1. As the first switch SW1, an illuminated push button switch or the like can be used.

In addition, the first solution storage tank 30 has a drain (second drain) 31 provided so as to discharge the electrolytic ion water in the first solution storage tank 30.

The generated solution tank 40 is a container for storing the electrolytic ion water generated in the electrolytic bath 10. In the generated solution tank 40, a strainer (second strainer) 41 for removing solid matters in the generated solution is provided. In the generated solution tank 40, a float switch FS4 for detecting an upper limit of a storage amount is provided.

In addition, the generated solution tank 40 has a drain (third drain) 42 provided so as to discharge the generated solution in the generated solution tank.

The second solution storage tank 50 is a container for storing generated electrolytic ion water having a second pH value. In this embodiment, electrolytic ion water having pH 13.1 is stored in the second solution storage tank 50.

In the second solution storage tank 50, a float switch FS5 for detecting an upper limit of a storage amount and a float switch FS6 for detecting a lower limit thereof are provided. When it is detected that the storage amount of the electrolytic ion water has reached the upper limit or that the storage amount of the electrolytic ion water has fallen below a reference value, notification of this fact is given to the outside by a lamp or a sound.

The second solution take-out system 78 for taking out the stored electrolytic ion water is connected to the second solution storage tank 50. The second solution take-out system 78 includes a second take-out passage 78a, and a seventh valve SV7 is provided in the middle of the second take-out passage 78a.

A second switch SW2 is connected to the seventh valve SV7, and a predetermined amount of electrolytic ion water can be taken out through operation of the second switch SW2. As the second switch SW2, an illuminated push button switch or the like can be used.

In addition, the second solution storage tank 50 has a drain (fourth drain) 51 provided so as to discharge the electrolytic ion water in the second solution storage tank 50.

The raw water supplying system 71 is a flow passage for supplying raw water from a water source such as tap water to the cathode chamber 12 of the electrolytic bath 10 and the electrolytic solution tank 20. The raw water supplying system 71 in this embodiment includes a raw water main flow passage 71a, and a raw water first supplying passage 71b and a raw water second supplying passage 71c are provided on the downstream side of the raw water main flow passage 71a.

The raw water main flow passage 71a is a flow passage connected to the tap to send tap water to the downstream. A pressure reducing valve 71d, a first valve SV1, and a filter group 71e are provided on the raw water main flow passage 71a. The filter group 71e can include one filter or two or more filters.

In this embodiment, the filter group includes an activated carbon filter, a reverse osmosis membrane filter, and a 1-µm mesh filter, but the number, order, type, and the like of the filters forming the filter group may be other than those described above.

The raw water first supplying passage 71b is a flow passage for supplying raw water to the cathode chamber 12 of the electrolytic bath 10. A second valve SV2, a flow rate sensor 71f, a flow rate adjustor 71g, and a check valve 71h are provided on the raw water first supplying passage 71b. An electromagnetic valve (solenoid valve) or the like can be used as the second valve SV2. The downstream side of the raw water first supplying passage 71b is connected to the cathode chamber 12 of the electrolytic bath 10.

The raw water second supplying passage 71c is a flow passage for supplying raw water to the electrolytic solution tank 20. A third valve SV3 is provided on the raw water second supplying passage 71c. An electromagnetic valve or the like can be used as the third valve SV3. The downstream side of the raw water second supplying passage 71c is connected to the electrolytic solution tank 20.

The generated solution sending system 72 is a flow passage for sending the electrolytic ion water generated in the electrolytic bath 10 to the downstream side. The generated solution sending system 72 includes a generated solution main flow passage 72a, and a generated solution first sending passage 72b and a generated solution second sending passage 72c are provided on the downstream side of the generated solution main flow passage 72a.

The generated solution first sending passage 72b is a flow passage for sending the generated electrolytic ion water having the first pH value to the first solution storage tank 30. A fourth valve SV4 is provided on the generated solution first sending passage 72b. An electromagnetic valve or the like can be used as the fourth valve SV4. The downstream side of the generated solution first sending passage 72b is connected to the first solution storage tank 30. A system between the cathode chamber 12 of the electrolytic bath 10 and the first solution storage tank 30 (specifically, a system including the generated solution main flow passage 72a and the generated solution first sending passage 72b) functions as a generated solution first sending system.

The generated solution second sending passage 72c is a flow passage for sending the generated electrolytic ion water having the first pH value to the generated solution tank 40. A fifth valve SV5 is provided on the generated solution second sending passage 72c. An electromagnetic valve or the like can be used as the fifth valve SV5. The downstream side of the generated solution second sending passage 72c is connected to the generated solution tank 40. A system between the cathode chamber 12 of the electrolytic bath 10 and the generated solution tank 40 (specifically, a system including the generated solution main flow passage 72a and the generated solution second sending passage 72c) functions as a generated solution second sending system.

The generated solution supplying system 73 is a flow passage for supplying the electrolytic ion water in the generated solution tank 40 to the cathode chamber 12 of the electrolytic bath 10. The generated solution supplying system 73 in this embodiment includes a generated solution supplying main flow passage 73a, and a fourth pump P4 and a sixth valve SV6 are provided in the middle of the generated solution supplying main flow passage 73a. An electromagnetic valve or the like can be used as the sixth valve SV6. The downstream side of the generated solution supplying main flow passage 73a is connected to the most downstream of the raw water first supplying passage 71b (downstream of the check valve 71h).

The electrolytic solution supplying system 74 is a flow passage for supplying an electrolytic solution to the anode chamber 13 of the electrolytic bath 10. The electrolytic solution supplying system 74 includes an electrolytic solution supplying main flow passage 74a, and a third pump P3 is provided in the middle of the electrolytic solution supplying main flow passage 74a. The downstream side of the electrolytic solution supplying main flow passage 74a is connected to the anode chamber 13 of the electrolytic bath 10.

The electrolytic solution sending system 75 is a flow passage for sending the electrolytic solution that has passed through the anode chamber 13 of the electrolytic bath 10 to the electrolytic solution tank 20. The electrolytic solution sending system 75 includes an electrolytic solution main sending passage 75a. The downstream side of the electrolytic solution main sending passage 75a is connected to the electrolytic solution tank 20.

The second solution sending system 76 is a flow passage for sending the electrolytic ion water having the second pH value stored in the generated solution tank 40 to the second solution storage tank 50. The second solution sending system 76 includes a second solution sending passage 76a, and a fifth pump P5 is provided in the middle of the second solution sending passage 76a. The downstream side of the second solution sending passage 76a is connected to the second solution storage tank 50.

The operation unit 60 is a functional unit for setting a type, a generation amount, or the like of the electrolytic ion water to be generated. Examples of the operation unit 60 include various input devices such as a touch panel and a physical switch. An operation signal obtained through operation of the operation unit 60 is transmitted to a control unit, and, for example, generation of the electrolytic ion water is carried out through control by the control unit.

The embodiment described here is merely an example, and the configuration of the electrolytic ion water generation apparatus of the present invention is not limited to the configuration of the embodiment. In the electrolytic ion water generation apparatus of the present invention, changes such as addition, omission, and replacement in the configuration may be made as appropriate within a range in which the desired object can be achieved.

Next, an operation of the electrolytic ion water generation apparatus of the embodiment is described. The electrolytic ion water generation apparatus of this embodiment can selectively generate electrolytic ion waters having different pH values. As an example, the electrolytic ion water generation apparatus of this embodiment can generate electrolytic ion water having pH 12.5 and electrolytic ion water having pH 13.1. In the following, an operation in a case in which the former electrolytic ion water is generated and an operation in a case in which the latter electrolytic ion water is generated are described separately.

[When Electrolytic Ion Water Having pH 12.5 (Electrolytic Ion Water Having First pH Value) Is Generated]

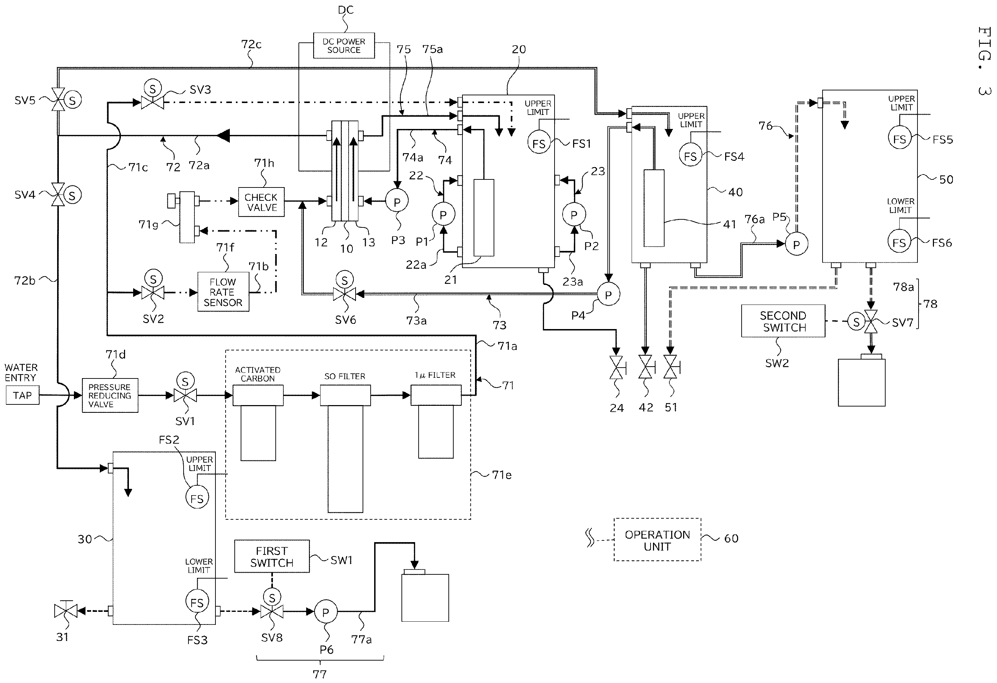

First, an example in a case in which the electrolytic ion water having pH 12.5 (electrolytic ion water having first pH value) is generated is described with reference to FIG. 3.
(1) When the electrolytic ion water having pH 12.5 is generated, first, raw water is supplied to the electrolytic solution tank 20 (indicated by the long dashed short dashed line in FIG. 3). At this time, the first valve SV1 and the third valve SV3 are "open," and the second valve SV2 is "closed."
(2) When the electrolytic solution tank 20 becomes full of raw water, the raw water is supplied to the cathode chamber 12 of the electrolytic bath 10 and an electrolytic solution is supplied to the anode chamber 13 (indicated by the long dashed double-short dashed line in FIG. 3). After that, the DC power source DC applies a DC voltage between both the terminals (cathode terminal 15a and anode terminal 16a) so that generation of the electrolytic ion water having pH 12.5 is started. At this time, the first valve SV1, the second valve SV2, and the fourth valve SV4 are "open," and the third valve SV3, the fifth valve SV5, and the eighth valve SV8 are "closed." The first pump P1, the second pump P2, and the third pump P3 are "ON."
(3) The electrolytic ion water having pH 12.5 generated through the above-mentioned step is stored in the first solution storage tank 30. The electrolytic ion water having pH 12.5 stored in the first solution storage tank 30 can be taken out by turning on the first switch SW1. At this time, the eighth valve SV8 is "open," and the sixth pump P6 is "ON."

### [When Electrolytic Ion Water Having pH 13.1 (Electrolytic Ion Water Having Second pH Value) Is Generated]

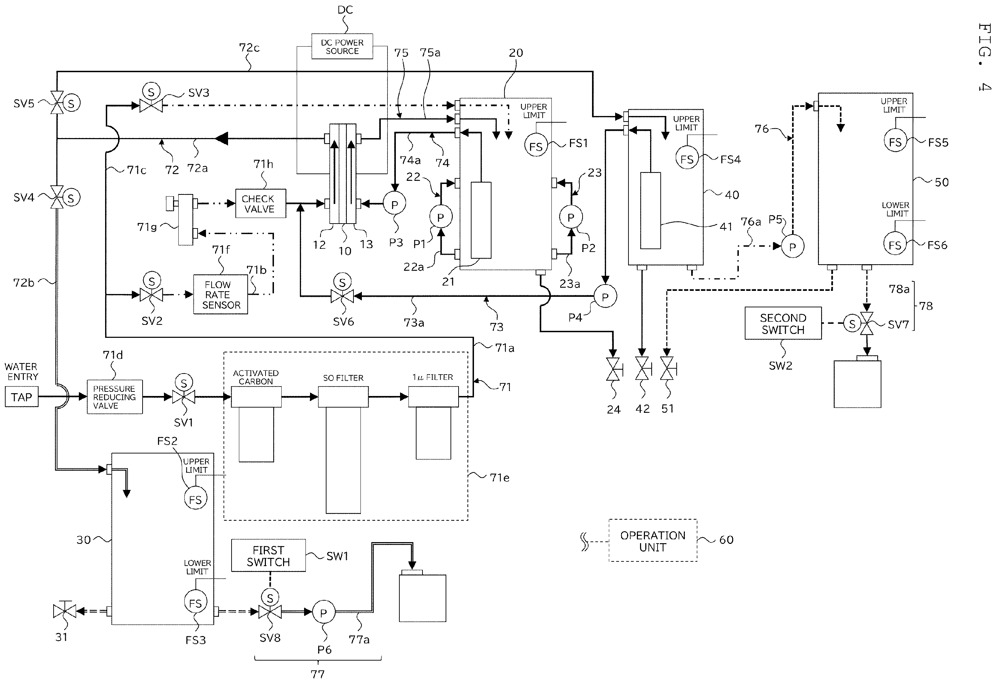

Next, an example in a case in which the electrolytic ion water having pH 13.1 (electrolytic ion water having second pH value) is generated is described with reference to FIG. 4.
(1) When the electrolytic ion water having pH 13.1 is generated, first, raw water is supplied to the electrolytic solution tank 20 (indicated by the long dashed short dashed line in FIG. 4). At this time, the first valve SV1 and the third valve SV3 are "open," and the second valve SV2 is "closed."
(2) When the electrolytic solution tank 20 becomes full of raw water, the raw water is supplied to the cathode chamber 12 of the electrolytic bath 10 and an electrolytic solution is supplied to the anode chamber 13 (indicated by the long dashed double-short dashed line in FIG. 4). After that, the DC power source DC applies a DC voltage between both the terminals (cathode terminal 15a and anode terminal 16a) so that generation of the electrolytic ion water having pH 12.5 is started. At this time, the first valve SV1, the second valve SV2, and the fifth valve SV5 are "open," and the third valve SV3, the fourth valve SV4, and the seventh valve SV7 are "closed." The first pump P1, the second pump P2, and the third pump P3 are "ON."
(3) The electrolytic ion water having pH 12.5 generated through the above-mentioned step is stored in the generated solution tank 40, and when the generated solution tank 40 is full of electrolytic ion water, generation of the electrolytic ion water having pH 13.1 is started through use of the electrolytic ion water having pH 12.5 in the generated solution tank 40. Specifically, the electrolytic ion water having pH 12.5 is supplied to the cathode chamber 12 of the electrolytic bath 10 and the electrolytic solution is supplied to the anode chamber 13, and then the DC power source DC applies a DC voltage between both the terminals (cathode terminal 15a and anode terminal 16a) so that generation of the electrolytic ion water having pH 13.1 is started. At this time, the fifth valve SV5 and the sixth valve SV6 are "open," and the second valve SV2, the third valve SV3, the fourth valve SV4, and the seventh valve SV7 are "closed." The first pump P1, the second pump P2, the third pump P3, and the fourth pump are "ON," and the fifth pump P5 is "OFF."
(4) The electrolytic ion water having pH 13.1 generated through the above-mentioned step is stored in the second solution storage tank 50. At this time, the seventh valve SV7 is "open," and the fifth valve SV5, the sixth valve SV6, and the eighth valve SV8 are "closed." The fifth pump P5 is "ON," and the first pump P1, the second pump P2, the third pump P3, and the fourth pump P4 are "OFF." The electrolytic ion water having pH 13.1 stored in the second solution storage tank 50 can be taken out by turning on the second switch SW2. At this time, the seventh valve SV7 is "open," and the eighth valve SV8 is "closed."

As the method of generating the electrolytic ion water having pH 13.1, in addition to the method of successively performing generation of the electrolytic ion water having the first pH value and generation of the electrolytic ion water having the second pH value as in the above-mentioned example, the electrolytic ion water having the first pH value may be generated in advance and stored in the generated solution tank 40, and then, at a different timing, the electrolytic ion water having the second pH value can be generated through use of the electrolytic ion water having the first pH value stored in the generated solution tank 40.

In such a case, there is an advantage in that the electrolytic ion water having the second pH value can be generated efficiently and in a short period of time because, for example, the time required for generating the electrolytic ion water having the first pH value can be omitted and the electrolytic ion water having the first pH value being a high pH value is used as the raw water.

Here, description has been given as an example of the case in which the electrolytic ion water having pH 12.5 is generated as the electrolytic ion water having the first pH value and the electrolytic ion water having pH 13.1 is generated as the electrolytic ion water having the second pH value, but the pH values of the electrolytic ion water to be generated are not limited to those values.

### Industrial Applicability

The electrolytic ion water generation apparatus of the present invention can suitably be used for generating electrolytic ion waters of two types having different pH values, in particular, strong alkaline ion water having pH 12.5 or higher.

### Reference Signs List

10 electrolytic bath
11 ion exchange membrane
12 cathode chamber
13 anode chamber
14 spacer
15 cathode plate
15a cathode terminal
16 anode plate
16a anode terminal
20 electrolytic solution tank
21 strainer (first strainer)
22, 23 stirring device
22a, 23a circulation passage
24 drain (first drain)
30 first solution storage tank
31 drain (second drain)
40 generated solution tank
41 strainer (second strainer)
42 drain (third drain)
50 second solution storage tank
51 drain (fourth drain)
60 operation unit
71 raw water supplying system
71a raw water main flow passage
71b raw water first supplying passage
71c raw water second supplying passage
71d pressure reducing valve
71e filter group
71f flow rate sensor
71g flow rate adjustor
71h check valve
72 generated solution sending system
72a generated solution main flow passage
72b generated solution first sending passage
72c generated solution second sending passage
73 generated solution supplying system
73a generated solution supplying main flow passage
74 electrolytic solution supplying system
74a electrolytic solution supplying main flow passage
75 electrolytic solution sending system
75a electrolytic solution main sending passage
76 second solution sending system
76a second solution sending passage
77 first solution take-out system
77a first take-out passage
78 second solution take-out system
78a second take-out passage
DC DC power source
FS1 to FS6 float switch
P1 to P6 first pump to sixth pump
SV1 to SV8 first valve to eighth valve
SW1 and SW2 first switch and second switch

## Claims

1. An electrolytic ion water generation apparatus, comprising:
an electrolytic solution tank configured to store an electrolytic solution;
an electrolytic bath including a cathode chamber and an anode chamber partitioned by an ion exchange membrane; and
a DC power source configured to apply a voltage between electrode plates including a cathode plate provided in the cathode chamber and an anode plate provided in the anode chamber,
the electrolytic ion water generation apparatus being configured to generate electrolytic ion water, by applying a voltage between the electrode plates with use of the DC power source to cause a reduction reaction,
the electrolytic ion water generation apparatus further comprising:
a generated solution tank configured to store the electrolytic ion water generated in the electrolytic bath;
a raw water supplying system configured to supply raw water to the cathode chamber of the electrolytic bath;
a generated solution supplying system configured to supply the electrolytic ion water in the generated solution tank to the cathode chamber of the electrolytic bath; and
an operation unit configured to perform switching between the raw water supplying system and the generated solution supplying system.

2. The electrolytic ion water generation apparatus according to claim 1, further comprising a first solution storage tank configured to store electrolytic ion water having a first pH value,
wherein, between the cathode chamber of the electrolytic bath and the first solution storage tank, a generated solution first sending system configured to send the electrolytic ion water that has passed through the cathode chamber to the first solution storage tank is provided.

3. The electrolytic ion water generation apparatus according to claim 1 or 2, wherein, between the cathode chamber of the electrolytic bath and the generated solution tank, a generated solution second sending system configured to send the electrolytic ion water that has passed through the cathode chamber to the generated solution tank is provided.

4. The electrolytic ion water generation apparatus according to claim 1 or 2, further comprising a second solution storage tank configured to store electrolytic ion water having a second pH value,
wherein, between the generated solution tank and the second solution storage tank, a second solution sending system configured to send the electrolytic ion water having the second pH value stored in the generated solution tank to the second solution storage tank is provided.
